# NEUE EUROPÄISCHE PATENTSCHRIFT

(11) **EP 1 336 429 B2**
(45) Veröffentlichungstag und Bekanntmachung des Hinweises auf die Entscheidung über den Einspruch: **28.09.2011**
(45) Hinweis auf die Patenterteilung: 26.10.2005
(21) Anmeldenummer: 03001436.9
(22) Anmeldetag: 22.01.2003
(51) Int. Cl.: B01J 19/00, C08F 2/01, C08F 4/64

(54) **Verfahren mit hohem Probendurchsatz zur Bestimmung der Qualität von Polymerisationskatalysatoren**
High throuput screening for the determination of the quality of polymerisation catalysts
Procédé à haut débit pour déterminer la qualité des catalyseurs de polymérisation

(30) Priorität: 19.02.2002 DE 10206988
(43) Veröffentlichungstag der Anmeldung: 20.08.2003
(73) Patentinhaber: Basell Polyolefine GmbH, 50389 Wesseling (DE)
(72) Erfinder: Kristen, Marc Oliver, Dr., 67117 Limburgerhof (DE); Eibeck, Peter, 67061 Ludwigshafen (DE); Gregorius, Heike, Dr., 56075 Koblenz (DE); Lilge, Dieter, Dr., 67117 Limburghof (DE)

(56) Entgegenhaltungen:
- WO-A-00/40331
- WO-A-01/36087
- WO-A-99/51980
- WO-A1-00/40331
- WO-A1-01/21560
- WO-A1-93/06479
- WO-A2-00/09255
- WO-A2-01/34660
- WO-A2-01/98371
- US-A- 5 596 275
- US-B1- 6 175 409
- US-B1- 6 208 137
- Produktdokumentation Chemspeed 23.05.2001 Fully automated Synthesis Workstation ASW 2000 P for reactions under pressure XP002239213
- BOUSSIE T R ET AL: "Parallel Solid-Phase Synthesis, Screening, and Encoding Strategies for Olefin-Polymerization Catalysts" TETRAHEDRON, ELSEVIER SCIENCE PUBLISHERS, AMSTERDAM, NL, Bd. 55, Nr. 39, 24. September 1999 (1999-09-24), Seiten 11699-11710, XP004178095 ISSN: 0040-4020
- JANDELEIT B ET AL: "COMBINATORIAL MATERIALS SCIENCE AND CATALYSIS" ANGEWANDTE CHEMIE. INTERNATIONAL EDITION, VERLAG CHEMIE. WEINHEIM, DE, 1999, Seiten 2495-2532, XP000922584 ISSN: 0570-0833
- Standard test method for determination of xylene solubles in propylene plastics ASTM 5492-98, publiziert: 1998

## Beschreibung

Die vorliegende Erfindung betrifft ein Verfahren zur Bestimmung der Qualität verschiedener Chargen eines Polymerisationskatalysators, eine Vorrichtung zur, im wesentlichen automatisierten, Bestimmung der Qualität von Polymerisationskatalysatoren und die Verwendung einer Vorrichtung zur Bestimmung der Qualität von Polymerisationskatalysatoren sowie eine Vorrichtung zur, im wesentlichen automatisierten, Bestimmung löslicher und unlöslicher Polymerfraktionen.

Der Einsatz von Metallocenenkatalysatoren (katalytisch aktive Mischung aus Metalloecenkomplexen und Cokatalysatoren) in der Polymerisation, insbesondere der Olefinpolymerisation, ist seit längerem bekannt. In den meisten technisch durchgeführten Polymerisationsverfahren werden die Komplexe nicht als gelöste Katalysatoren eingesetzt, sondern auf Trägermaterialien (z.B. Kieselgel) aufgebracht.

Bei der Überprüfung der Qualität von Metallocenkatalysatoren ging man bisher so vor, dass man die Katalysatoren auf einer Trägersubstanz aufbrachte, anschliessend unter hohem Druck bestimmte Monomere, z.B. Alk-1-ene, polymerisierte und an Hand bestimmter physikalischer Kenngrößen des Polymers Aussagen zu Polymerisationseigenschaften, beispielsweise Stereoselektivität, des Katalysators machte und so dessen Qualität beurteilte.

So liefert zum Beispiel die rac-Form eines chiralen Metallocenkatalysators bei der Propylenpolymerisation praktisch ausschließlich das gewünschte isotaktische Polypropylen, währenddessen die meso-Form des chemisch identischen Metallocenkatalysators das unerwünschte ataktische Polypropylen ergibt. Üblicherweise liegen derartige Metallocenkatalysatoren in Gemischen vor in welchen die rac-und die meso-Form in bestimmten Mengenverhältnissen präsent sind.

Man kann also über die Stereochemie des Polymeren (Isotaktizität oder Ataktizität) beispielsweise des Polypropylens auf die Güte des Metallocenkatalysators schließen mit welchem dieses Polymere erzeugt wurde.

Eine Methode zur Bestimmung des Gehalts an isotaktischem Polypropylen in Propylenpolymerisaten ist die Bestimmung der xylollöslichen Anteile nach ASTM D 5492-98 und EN ISI 6427. Als Kenngröße werden die sogenannten Xl-Werte ermittelt. Ein großer Xl-Wert bedeutet geringe Isotaktizität, somit geringe Katalysatorqualität.

Die oben beschriebenen Tests zur Bestimmung der Katalysatorqualität haben den Nachteil, daß sie sehr aufwendig sind, weil verhältnismäßig große Stoffmengen in relativ großen Apparaturen gehandhabt werden müssen. Polymerisationen und Analytik sind oft nur nacheinander und in geringer Zahl durchführbar und es dauert eine lange Zeit, bis endgültig eine Aussage über die Güte eines Katalysators getroffen werden kann. Dies ist besonders dann von Nachteil, wenn während kommerzieller Polymerisationen die Qualität der entsprechenden Polymerisationskatalysatoren schnell und verläßlich überprüft werden muß.

In der Literatur werden parallele Polymerisationen mit Katalysatoren beschrieben (siehe z.B. Angew. Chem., Int. Ed. Eng. 2000, 39, 4367; Angew. Chem., Int. Ed. Eng. 1998, 37, 3272, WO 98/03521) doch werden dort in spezieller Weise gekennzeichnete bzw. kovalent auf einen Träger gebundenen Katalysatoren eingesetzt. Diese beschriebenen Versuche sind allerdings nur zum Aufspüren neuer Katalysatorstrukturen brauchbar.

Die Qualitätsüberprüfung unter hohem Probendurchsatz bereits entwickelter Katalysatoren wird nicht beschrieben.

Der vorliegenden Erfindung lag daher die Aufgabe zugrunde, ein Verfahren zu finden, das schnell und kostengünstig die Bewertung der Qualität von vielen Katalysatorproben für die Polymerisationskatalyse ermöglicht, ohne daß man jede Katalysatorprobe, wie bisher, individuell im größeren Maßstab polymerisieren und das so gewonnene Polymer in verhältnismäßig großen Ansätzen analysieren muß.

Demgemäß wurde ein Verfahren zur Bestimmung der Qualität von Polymerisationskatalysatoren umfassend
a) die Bereitstellung der Katalysatoren,
b) die Polymerisation eines Monomeren mit diesen Katalysatoren,
c) die Isolierung der in c) erhaltenen Polymeren,
d) die Charakterisierung der Polymeren
dadurch gekennzeichnet, daß das Verfahren in einer Anordnung aus n Gefäßen im wesentlichen automatisiert durchgeführt wird, wobei die Verfahrensschritte a) bis d) alle parallel oder alle seriell oder ein Teil der Verfahrensschritte a) bis d) parallel und der andere Teil seriell durchgeführt werden und n eine natürliche Zahl größer oder gleich 2 ist gefunden, eine Vorrichtung zur, im wesentlichen automatisierten, Bestimmung der Qualität von Polymerisationskatalysatoren, im wesentlichen bestehend aus A) einem Synthesemodul und B) einem Analysemodul zur Bestimmung löslicher und unlöslicher Polymerfraktionen, wobei A) und/oder B) jeweils mindestens vier Gefäße enthalten und das kumulierte jeweilige Volumen jener Gefäße aus A) oder B) nicht größer ist als 100000 ml ist und die Verwendung dieser Vorrichtung zur Bestimmung der Qualität von Polymerisationskatalysatoren gefunden.

Synthesemodule A) sind bekannt und kommerziell erhältlich. Sie enthalten im allgemeinen mehrere Reaktionsgefäße, üblicherweise 4 bis 300, vorzugsweise 12 bis 96 die auch unter Überdruck gesetzt werden können, üblicherweise 1 bis 100 bar, vorzugsweise 10 bis 50 bar. In der Regel sind die Reaktionsgefäße zylinderartige Gefäße aus Glas oder Metall und hier vorzugsweise Edelstahl. Das kumulierte Volumen (Anzahl der Reaktionsgefäße x Volumen der jeweiligen Einzelgefäße) der Reaktionsgefäße des Moduls A) beträgt nicht mehr als 100000 ml, vorzugsweise 50 bis 10000 ml und insbesondere 200 bis 2500 ml. Üblicherweise haben die Einzelgefäße des Moduls A) jeweils ein Volumen von 5 bis 100, vorzugsweise 10 bis 75 ml. Weiterhin enthalten Synthesemodule A) in der Regel Dosier-, Rühr- und/oder Schüttel-, Heiz- und/oder Kühlvorrichtungen und eine Steuer- und/oder Regeleinheit für diese Funktionen. Beispiel für derartige Synthesemodule sind die Automaten der Firma Chemspeed, Augst, Schweiz, vorzugsweiese der Typ ASW 2000, insbesondere der Typ ASW 2000P.

Das Analysenmodul B), die Vorrichtung zur, im wesentlichen automatisierten, Bestimmung der löslichen und unlöslichen Polymerfraktionen umfaßt eine Vorbereitungseinheit mit 4 bis 300, vorzugsweise 12 bis 96 Gefäßen, eine beheizbare Platte zur Lösung der Polymere in die die Vorbereitungseinheit eingesetzt werden kann, eine kühlbare Platte zur Ausfällung unlöslicher Polymere, in die die Vorbereitungseinheit eingesetzt werden kann, eine Filtrationseinheit zum Trennen des gelösten vom nicht gelösten Polymer, eine Verdampfungseinheit zur Isolierung des gelösten Polymers und eine Wägeeinheit zur Bestimmung des gelösten Anteils.

Vorzugsweise werden mit dem Analysenmodul B) xylollösliche und xylolunlösliche Polymerfraktionen, vorzugsweise von Propylenhomo- und/oder copolymeren bestimmt und man erhält somit als Meßwert den sogenannten Xl-Wert. Hierfür hat sich folgendes Verfahren als gut geeignet herausgestellt. Um homogene Polymerlösungen herzustellen werden spezielle Bechergläser (Steilbrustgefäße) mit einem Volumen von 50 bis 500ml, bevorzugt 150 ml, verwendet, die mit einem Luftkühler versehen sind. Der Luftkühler ist im allgemeinen mindestens 15 cm, bevorzugt 25 cm, lang und besitzt im allgemeinen einen inneren Durchmesser von 5 bis 25 mm, bevorzugt 10 mm. Er kann aus Glas, Metall oder einem wärmeleitfähigen Kunststoff hergestellt sein. Die zu untersuchenden Polymere und das organische Lösungsmittel (bevorzugt ein aromatisches Lösungsmittel, besonders bevorzugt Xylol (auch als Isomerengemisch) und Ethylbenzol) werden in die Bechergläser gefüllt, ein Magnetrührerstab hinzugegeben und die Luftkühler auf die Bechergläser gesetzt. Eine solche Versuchsanordnung wird im folgenden Xl-Einheit genannt.

Im allgemeinen werden mehrere dieser Xl-Einheiten in eine beheizbare Platte eingesetzt. Dabei wird die Durchmischung aller Xl-Einheiten in der Regel durch Magnetrührer, die in die beheizbare Platte integriert sind, gewährleistet. Die Temperatur der beheizbaren Platte wird so eingestellt, dass das Lösungsmittel zu sieden beginnt. Nach einer angemessenen Zeit, die typischerweise zwischen 10 und 360 min, bevorzugt 20 bis 40 min, liegt ist das Polymer gelöst. Für das Wiederausfällen wird die Xl-Einheit in die kühlbare Platte eingesetzt, bei der die Temperatur, in Anlehnung an die Standardmethodik, in der Regel auf 25 °C eingestellt ist.

Für eine beschleunigte Kristallisation kann die Xl-Einheit alternativ in eine Platte gestellt werden, die auf 0 bis 10 °C, bevorzugt 5 °C, temperiert ist. Nachdem die Xl-Einheit die eingestellte Temperatur nach 5 bis 20 min angenommen hat, wird sie in eine dritte Platte überführt, die eine Temperatur von 15 bis 30 °C, bevorzugt 19,5 bis 25,5 °C aufweist.

Bei diesen Prozeduren können die Xl-Einheiten einfach und schnell per Hand oder mit einem Transportautomaten von einer Platte zur anderen befördert werden, Dabei können auch 10 und mehr Xl-Einheiten auf einmal transferiert werden. Die Anzahl der Xl-Einheiten pro Analyse wird dabei nur von der gewählten Größe der Platten bestimmt.

Als nächstes werden die abgekühlten Lösungen filtriert und das Filtrat in ein gewogenes Gefäß (z.B. ein Becherglas) gegeben, wobei die Filtration sowohl parallel als auch seriell durchgeführt werden kann. Die Gefäße werden dann in einen IR-Dancer (Fa. Hett-Lab AG, Schweiz) überführt, wo das Lösungsmittel parallel (10 bis 100 Gefäße, bevorzugt 12 bis 48) im Vakuum (800 bis 200 mbar) unter Erhitzen durch IR Lampen entfernt wird. Wenn mehr als 95%, bevorzugt mehr als 99%, des Lösungsmittels entfernt ist, wird das Vakuum im allgemeinen auf weniger als 50 mbar eingestellt. Dabei wird während der gesamten Zeit im IR-Dancer eine Temperatur zwischen 70 und 200 °C, bevorzugt 100 bis 130 °C, eingestellt. Nach 15 bis 360 min, bevorzugt 20 bis 30 min, wird die Trocknung beendet und die Gefäße zur Bestimmung des Xl-Wertes erneut gewogen. Die Differenz zwischen dieser Wägung und der Tarawägung der Gefäße ergibt den löslichen Anteil, der geteilt durch die Masse des eingewogenen Polymers den Xl-Wert in Prozent ergibt.

Parallele Durchführung liegt dann vor, wenn ein Arbeitsschritt oder mehrere Arbeitsschritte, zum Beispiel Befüllen, Polymerisation, Erhitzen etc., innerhalb der Verfahrensstufen a) bis d) praktisch gleichzeitig in allen Gefäßen des jeweiligen Moduls A) und/oder B) durchgeführt wird.

Serielle Durchführung liegt dann vor, wenn ein Arbeitsschritt oder mehrere Arbeitsschritte, zum Beispiel Befüllen, Polymerisation, Erhitzen etc., innerhalb der Verfahrensstufen a) bis d), nacheinander von Gefäß zu Gefäß des jeweiligen Moduls A) und/oder B) durchgeführt wird.

Vorzugsweise werden die Arbeitschritte in den Verfahrensstufen b) und / oder c) und / oder gegebenenfalls d) des erfindungsgemäßen Verfahrens parallel durchgeführt. Ganz besonders bevorzugt werden die Arbeitsschritte in den Verfahrensstufen b) und d) parallel durchgeführt.

Folgende Verfahrensvariante ist gut geeignet: Hierzu wird in einer Apparatur polymerisiert, die 12 Reaktorgefäße umfaßt und die die parallele Durchführung von Polymerisationen in ermöglicht (im folgenden Parallelreaktor genannt). Die aktiven Katalysatoren werden in der Regel direkt im Parallelreaktor bereitgestellt bzw. durch Umsetzen der Katalysatorvorstufen (z.B. Metallocenkomplex) mit einem geeigneten Aktivator im Parallelreaktor erzeugt. Anschliessend wird, üblicherweise per automatischer Dosieranlage eine bestimmte Menge des aktiven Katalysators in den jeweiligen Polymerisationsreaktor nacheinander oder vorzugsweise praktisch gleichzeitig (parallel) gegeben.

Es handelt sich dabei um eine Anzahl verschiedener Chargen eines Katalysators.

Die Katalysatorlösungen oder -suspensionen werden dann, praktisch gleichzeitig (parallel) mit dem Monomeren versetzt, wobei der Aggregatzustand des Monomeren unkritisch ist, gegebenenfalls erhitzt und somit die Polymerisation parallel durchgeführt. Bevorzugte Monomere sind Ethylen und / oder Propylen. Die Polymerisation kann unter Normaldruck aber auch unter Druck erfolgen. Bevorzugte Katalysatoren sind Katalysatoren zur Herstellung von Polyolefinen, besonders bervorzugt sind Metallocenkatalysatoren.

Nach der Polymerisation wird das erhaltene Polymer isoliert, zum Beispiel durch Filtrieren und Trocknen, ausgewogen und so die Aktivität des Katalysators nach der Formel Ausbeute Polymer (kg) / (Menge des Katalysators (mol) * Zeit (h)) errechnet.

Zusätzlich können weitere wichtige Polymereigenschaften bestimmt werden. Dies ist, vorzugsweise bei der Polypropylenherstellung, vorzugsweise die Bestimmung des löslichen Anteils (z.B. in Xylol), da sich hierdurch z.B. das rac/meso-Verhältnis eines Metallocenkatalysators bestimmen lässt. Zur erfindungsgemäßen X1-Wertbestimmung (Hochdurchsatz- X1-Wertbestimmung) wird vorzugsweise die oben beschrieben Vorrichtung (Modul B)) und das dort verschriebene Verfahren verwendet.

Als Übergangsmetallkomponente für die Polymerisationskatalysatoren kommen beispielsweise die in WO 96/23010 beschriebenen Nickel- und Palladium-Komplexe, die in WO 98/27124, WO 98/30612, WO 99/12981 und WO 00/50470 beschriebenen Eisen- und Cobalt-Komplexe, die in WO 00/58370 und WO 01/12641 beschriebenen Chrom-Komplexe aber auch andere Übergangsmetallkomplexe wie die in Angewandte Chemie 1999, 111, S.448, Chem Rev. 2000, 100, 1169, Coord. Chem. Rew. 2000, 203, 325 beschriebenen, vorzugsweise Metallocene als Komponente für die Polymerisationskatalysatoren in Frage.

Unter Metallocenkatalysatoren sollen alle Katalysatorsysteme verstanden werden, die mindestens eine Metallocenverbindung enthalten. Metallocene sind hierbei alle Komplexverbindungen aus Metallen von Nebengruppen des Periodensystems mit organischen Liganden, die zusammen mit metalloceniumionenbildenden Verbindungen wirksame Katalysatorsysteme ergeben.

Erfindungsgemäß geeignete Metallocenkatalysatoren enthalten als aktive Bestandteile in der Regel
A) mindestens einen Metallocenkomplex der allgemeinen Formel (I) 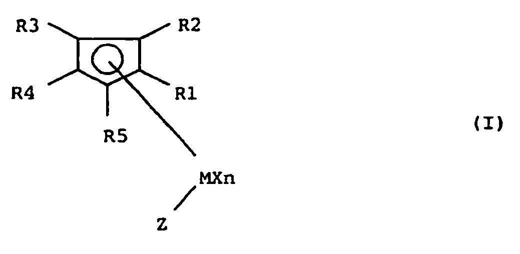 in der die Substituenten und Indizes folgende Bedeutung haben:
- M: Titan, Zirkonium, Hafnium, Vanadium, Niob oder Tantal, sowie Elemente der III. Nebengruppe des Periodensystems und der Lanthanoiden,
- X: Fluor, Chlor, Brom, Iod, Wasserstoff, C1-C10-Alkyl, C6-C15-Aryl, Alkylaryl mit 1 bis 10 C-Atomen im Alkylrest und 6 bis 20 C-Atomen im Arylrest, -OR6 oder -NR6R7,
- n: 1, 2 oder 3, wobei n der Wertigkeit von M minus der Zahl 2 entspricht,
wobei
- R6 und R7: C1-C10-Alkyl, C6-C15-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten und
die Reste X gleich oder verschieden sind,
- R1 bis R5: Wasserstoff, C1-C10-Alkyl, 5- bis 7-gliedriges Cycloalkyl, das seinerseits durch C1-C10-Alkyl substituiert sein kann, C6-C15-Aryl oder Arylalkyl, wobei auch zwei benachbarte Reste gemeinsam für 4 bis 15 C-Atome aufweisende gesättigte oder ungesättigte cyclische Gruppen stehen können, oder Si(R8)3 mit
- R8: C1-C10-Alkyl, C3-C10-Cycloalkyl oder C6-C15-Aryl sein kann und
Z für X oder 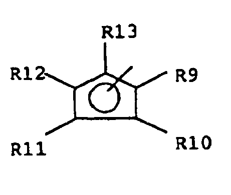 steht,
wobei die Reste
- R9 bis R13: Wasserstoff, C1-C10-Alkyl, 5- bis 7-gliedriges Cycloalkyl, das seinerseits durch C1-C10-Alkyl substituiert sein kann, C6-C15-Aryl oder Arylalkyl bedeuten und wobei auch zwei benachbarte Reste gemeinsam für 4 bis 15 C-Atome aufweisende gesättigte oder ungesättigte cyclische Gruppen stehen können, oder Si(R14)3 mit
- R14: C1-C10-Alkyl, C3-C10-Cycloalkyl oder C6-C15-Aryl bedeuten,
oder wobei die Reste R4 und Z gemeinsam eine Gruppierung -R15-A-bilden, in der
= BR16, = AlR16, -Ge-, -Sn-, -O-, -S-, = SO, = SO2,
= NR16, = CO, = PR16 oder = P(O)R16 ist,
- R15: 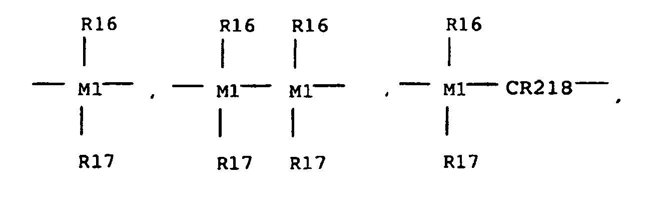 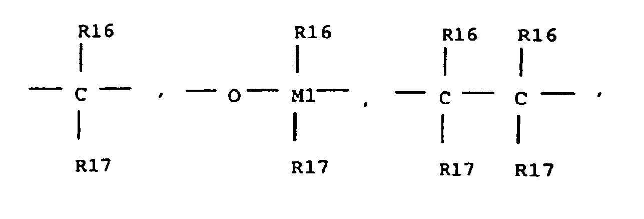
wobei
- R16, R17 und R18: gleich oder verschieden sind und jeweils ein Wasserstoffatom, ein Halogenatom, eine C1-C10-Alkylgruppe, eine C1-C10-Fluoralkylgruppe, eine C6-C10-Fluorarylgruppe, eine C6-C10-Arylgruppe, eine C1-C10-Alkoxygruppe, eine C2-C10-Alkenylgruppe, eine C7-C40-Arylalkylgruppe, eine C8-C40-Arylalkenylgruppe oder eine C7-C40-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
- M1: Silicium, Germanium oder Zinn ist,
- A: ―O―, ―S―, 〉NR19 oder 〉PR19 bedeuten,
mit
- R19: C1-C10-Alkyl, C6-C15-Aryl, C3-C10-Cycloalkyl, C7-C18-Alkylaryl oder Si(R20)3,
- R20: Wasserstoff, C1-C10-Alkyl, C6-C15-Aryl, das seinerseits mit C1-C4-Alkylgruppen substituiert sein kann oder C3-C10-Cycloalkyl
oder wobei die Reste R4 und R12 gemeinsam eine Gruppierung -R15-bilden.

Bevorzugt sind die Reste X in der allgemeinen Formel (I) gleich.

Von den Metall der allgemeinen Formel (I) sind 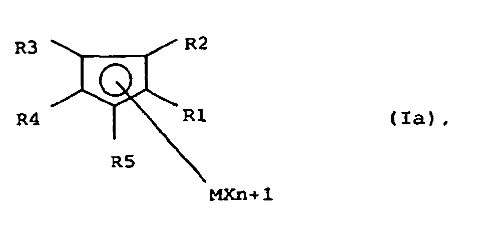 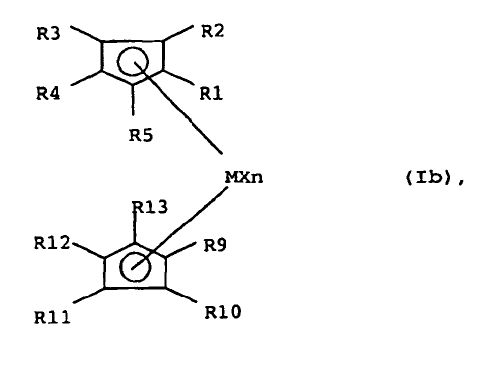 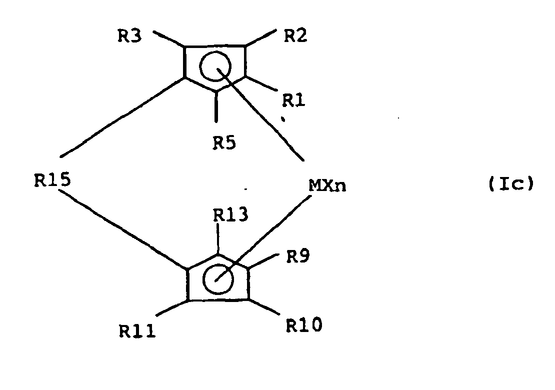 und 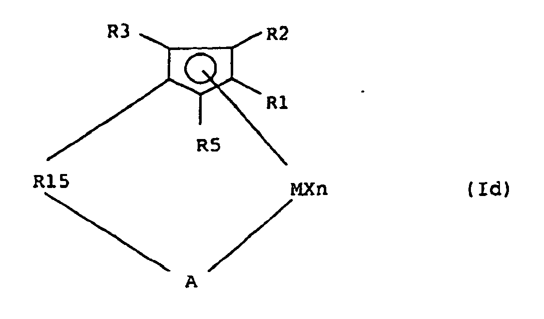 bevorzugt.

Von den Verbindungen der Formel (Ia) sind insbesondere diejenigen bevorzugt, in denen
- M: Titan, Zirkonium oder Hafnium,
- X: Chlor, C1-C4-Alkyl oder Phenyl,
- n: die Zahl 2 und
- R1 bis R5: Wasserstoff oder C1-C4-Alkyl bedeuten.

Von den Verbindungen der Formel (Ib) sind als bevorzugt diejenigen zu nennen, bei denen
- M: für Titan, Zirkonium oder Hafnium steht,
- X: Chlor, C1-C4-Alkyl oder Phenyl,
- n: die Zahl 2,
- R1 bis R5: Wasserstoff, C1-C4-Alkyl oder Si(R8)3 und
- R9 bis R13: Wasserstoff, C1-C4-Alkyl oder Si(R14)3 bedeuten.

Insbesondere sind die Verbindungen der Formel (Ib) geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)zirkoniumdichlorid,
Bis(methylcyclopentadienyl)zirkoniumdichlorid,
Bis(ethylcyclopentadienyl)zirkoniumdichlorid,
Bis(n-butylcyclopentadienyl)zirkoniumdichlorid und
Bis(trimethylsilylcyclopentadienyl)zirkoniumdichlorid
sowie die entsprechenden Dimethylzirkoniumverbindungen.

Von den Verbindungen der Formel (Ic) sind diejenigen besonders geeignet, in denen
- R1 und R9: gleich sind und für Wasserstoff oder C1-C10-Alkylgruppen stehen,
- R5 und R13: gleich sind und für Wasserstoff, eine Methyl-, Ethyl-, iso-Propyl- oder tert.-Butylgruppe stehen,
- R3 und R11: C1-C4-Alkyl und
- R2 und R10: Wasserstoff bedeuten
oder
zwei benachbarte Reste R2 und R3 sowie R10 und R11 gemeinsam für 4 bis 12 C-Atome aufweisende gesättigte oder ungesättigte cyclische Gruppen stehen,
- R15: für 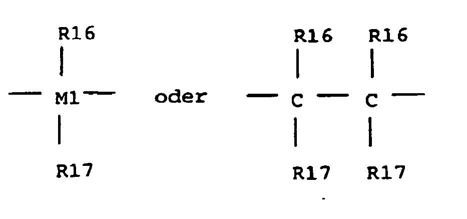 steht,
- M: für Titan, Zirkonium oder Hafnium und
- X: für Chlor, C1-C4-Alkyl oder Phenyl stehen.

Beispiele für besonders geeignete Komplexverbindungen (Ic) sind u.a.
Dimethylsilandiylbis(cyclopentadienyl)zirkoniumdichlorid,
Dimethylsilandiylbis(indenyl)zirkoniumdichlorid,
Dimethylsilandiylbis(tetrahydroindenyl)zirkoniumdichlorid,
Ethylenbis(cyclopentadienyl)zirkoniumdichlorid,
Ethylenbis(indenyl)zirkoniumdichlorid,
Ethylenbis(tetrahydroindenyl)zirkoniumdichlorid,
Tetramethylethylen-9-fluorenylcyclopentadienylzirkoniumdichlorid,
Dimethylsilandiylbis(3-tert.butyl-5-methylcyclopentadienyl)-zirkoniumdichlorid,
Dimethylsilandiylbis(3-tert.butyl-5-ethylcyclopentadienyl)-zirkoniumdichlorid,
Dimethylsilandiylbis(2-methylindenyl)zirkoniumdichlorid,
Dimethylsilandiylbis(2-isopropylindenyl)zirkoniumdichlorid,
Dimethylsilandiylbis(2-tert.butylindenyl)zirkoniumdichlorid,
Diethylsilandiylbis(2-methylindenyl)zirkoniumdibromid,
Dimethylsilandiylbis(3-methyl-5-methylcyclopentadienyl)-zirkoniumdichlorid,
Dimethylsilandiylbis(3-ethyl-5-isopropylcyclopentadienyl)-zirkoniumdichlorid,
Dimethylsilandiylbis(2-ethylindenyl)zirkoniumdichlorid,
Dimethylsilandiylbis(2-methyl-4,5-benzindenyl)zirkoniumdichlorid
Dimethylsilandiylbis(2-ethyl-4,5-benzindenyl)zirkoniumdichlorid
Methylphenylsilandiylbis(2-methyl-4,5-benzindenyl)-zirkoniumdichlorid,
Methylphenylsilandiylbis(2-ethyl-4,5-benzindenyl)-zirkoniumdichlorid,
Diphenylsilandiylbis(2-methyl-4,5-benzindenyl)zirkoniumdichlorid,
Diphenylsilandiylbis(2-ethyl-4,5-benzindenyl)zirkoniumdichlorid
und Diphenylsilandiylbis(2-methylindenyl)hafniumdichlorid
sowie die entsprechenden Dimethylzirkoniumverbindungen.

Weitere Beispiele für geeignete Komplexverbindungen sind u.a.
Dimethylsilandiylbis(2-methyl-4-phenylindenyl)zirkoniumdichlorid,
Dimethylsilandiylbis(2-methyl-4-naphthylindenyl)zirkoniumdichlorid,
Dimethylsilandiylbis(2-methyl-4-isopropylindenyl)zirkoniumdichlorid,
Dimethylsilandiylbis(2-methyl-4,6-diisopropylindenyl)zirkoniumdichlorid,
Dimethylsilandiylbis(2-methyl-4[4'-tert.butylphenyl]indenyl)-zirkoniumdichlorid,
Dimethylsilandiylbis(2-ethyl-4[4'-tert.butylphenyl]indenyl)-zirkoniumdichlorid,
Dimethylsilandiylbis(2-propyl-4[4'-tert.butylphenyl]indenyl)-zirkoniumdichlorid und
Dimethylsilandiyl(2-isopropyl-4[4'-tert.butylphenyl]indenyl)-(2-methyl-4[4'-tert.butylphenyl]indenyl) zirkoniumdichlorid
sowie die entsprechenden Dimethylzirkoniumverbindungen.

Bei den Verbindungen der allgemeinen Formel (Id) sind als besonders geeignet diejenigen zu nennen, in denen
- M: für Titan oder Zirkonium,
- X: für Chlor, C1-C4-Alkyl oder Phenyl stehen.
- R15: für 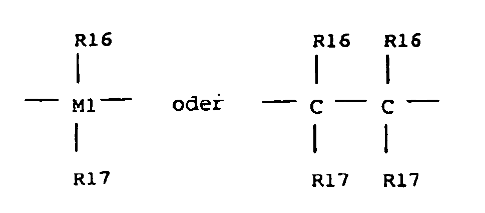 steht,
und
- A: für ―O― , ―S― , 〉NR19
- R1 bis R3 und R5: für Wasserstoff, C1-C10-Alkyl, C3-C10-Cycloalkyl, C6-C15-Aryl oder Si(R8)3 stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 be schrieben.

Als Komponente A) können auch Mischungen verschiedener Metallocenkomplexe eingesetzt werden.

Weiterhin enthalten die Metallocenkatalysatoren als Komponente B) mindestens eine metalloceniumionenbildende Verbindung.

Geeignete metalloceniumionenbildende Verbindungen B) sind beispielsweise starke, neutrale Lewissäuren, ionische Verbindungen mit lewissauren Kationen oder ionische Verbindungen mit Brönsted-Säuren als Kationen.

Als starke, neutrale Lewissäuren sind Verbindungen der allgemeinen Formel (II)

M2X1X2X3 (II)

bevorzugt, in der
- M2: ein Element der III. Hauptgruppe des Periodensystems bedeutet, insbesondere B, Al oder Ga, vorzugsweise B,
- X1, X2 und X3: für Wasserstoff, C1-C10-Alkyl, C6-C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel (II), in der X1, X2 und X3 gleich sind, vorzugsweise Tris(pentafluorphenyl)boran.

Als ionische Verbindungen mit lewissauren Kationen sind Verbindungen der allgemeinen Formel (III)

[Ya+) Q₁ Q₂ ···^{Q2}]^{d+} (III)

geeignet, in denen
- Y: ein Element der I. bis VI. Hauptgruppe oder der I. bis VIII. Nebengruppe des Periodensystems bedeutet,
- Q1 bis Q2: für einfach negativ geladene Reste wie C1-C28-Alkyl, C6-C15-Aryl, Alkylaryl, Arylalkyl, Halogenalkyl, Halogenaryl mit jeweils 6 bis 20 C-Atomen im Aryl- und 1 bis 28 C-Atome im Alkylrest, C3-C10-Cycloalkyl, welches gegebenenfalls mit C1-C10-Alkylgruppen substituiert sein kann, Halogen, C1-C28-Alkoxy, C6-C15-Aryloxy, Silyl- oder Mercaptylgruppen
- a: für ganze Zahlen von 1 bis 6 und
- z: für ganze Zahlen von 0 bis 5 steht,
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an starken, neutralen Lewissäuren, ionischen Verbindungen mit lewissauren Kationen oder ionischen Verbindungen mit Brönsted-Säuren als Kationen beträgt bevorzugt 0,1 bis 10 Äquivalente, bezogen auf den Metallocenkomplex A).

Besonders geeignet als metalloceniumionenbildende Verbindung B) sind offenkettige oder cyclische Alumoxanverbindungen der allgemeinen Formeln (IV) oder (V) 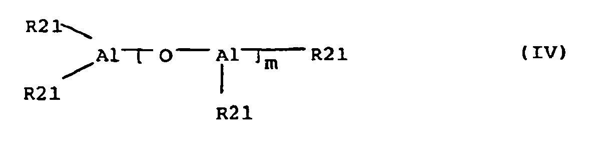 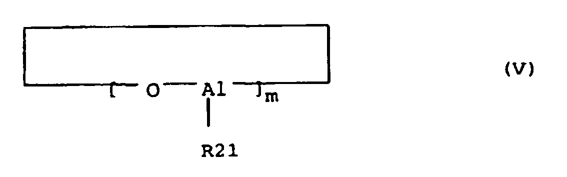
- wobei R21: eine C1-C4-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe A) und die oligomeren Alumoxanverbindungen der allgemeinen Formeln (IV) oder (V) in solchen Mengen zu verwenden, daß das atomare Verhältnis zwischen Aluminium aus den oligomeren Alumoxanverbindungen und dem Übergangsmetall aus den Metallocenkomplexen im Bereich von 10:1 bis 10⁶:1, insbesondere im Bereich von 10:1 bis 10⁴:1, liegt.

Weiterhin können als Komponente B) anstelle der Alumoxanverbindungen der allgemeinen Formeln (IV) oder (V) Aryloxyalumoxane, wie in der US-A 5 391 793 beschrieben, Aminoaluminoxane, wie in der US-A 5 371 260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Geeignete metalloceniumionenbildende Verbindungen B) sind auch die in der WO 99/06414 offenbarten Bor-Aluminium-Verbindungen wie beispielsweise Di-[bis(pentafluorphenylboroxy)]methylalan. Die Bor-Aluminium-Verbindungen können auch abgeschiedenen auf einen organischen oder anorganischen Träger eingesetzt werden.

Vorzugsweise werden sowohl die Metallocenkomplexe A) als auch die metalloceniumionenbildende Verbindungen B) in Lösung eingesetzt, wobei aromatische Kohlenwasserstoffe mit 6 bis 20 C-Atomen, insbesondere Xylole und Toluol, besonders bevorzugt sind.

Geeignete Metallocenkatalysatoren können als weitere Komponente C) zusätzlich noch eine Metallverbindung der allgemeinen Formel (VI)

M3(R22)r(R23)s(R24)t (VI)

in der
- M3: ein Alkali-, ein Erdalkalimetall oder ein Metall der III. Hauptgruppe des Periodensystems, d.h. Bor, Aluminium, Gallium, Indium oder Thallium bedeutet,
- R22: Wasserstoff, C1-C10-Alkyl, C6-C15-Aryl, Alkylaryl oder Arylalkyl mit jeweils 1 bis 10 C-Atom im Alkylrest und 6 bis 20 C-Atomen im Arylrest,
- R23 und R24: Wasserstoff, Halogen, C1-C10-Alkyl, C6-C15-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
und
- s und t: ganze Zahlen von 0 bis 2 bedeuten, wobei die Summe r+s+t der Wertigkeit von M3 entspricht,
enthalten.
Von den Metallverbindungen der allgemeinen Formel (VI) sind diejenigen bevorzugt, in denen
- M3: Lithium, Magnesium oder Aluminium bedeutet und
- R23 und R24: für C1-C10-Alkyl stehen.

Besonders bevorzugte Metallverbindungen der Formel (VI) sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn eine Metallverbindung C) eingesetzt wird, ist sie bevorzugt in einer solchen Menge im Katalysatorsystem enthalten, daß das molare Verhältnis von M3 aus Formel (VI) zu Übergangsmetall M aus Formel (I) von 800:1 bis 1:1, insbesondere 500:1 bis 50:1, beträgt.

In einer besonderen Ausführungsform werden trägerfixierte Katalysatoren eingesetzt, insbesondere trägerfixierte Metallocenkatalysatoren.

Als Trägermaterialien werden vorzugsweise feinteilige, poröse Träger eingesetzt, die im allgemeinen einen Teilchendurchmesser im Bereich von 1 bis 300 µm aufweisen, insbesondere von 20 bis 90 µm. Geeignete Trägermaterialien sind beispielsweise anorganische Oxide des Siliciums, des Aluminiums, des Titans oder eines der Metalle der I. oder II. Hauptgruppe des Periodensystems oder Mischungen dieser Oxide, von denen außer Aluminiumoxid oder Magnesiumoxid oder einem Schichtsilikat insbesondere Kieselgel bevorzugt ist.

Die Natur der Monomeren ist nicht kritisch. Üblicherweise kommen Olefine zur Anwendung, wie C2- bis C40-Olefine, die linear, verzweigt oder auch cyclisch sein können, vorzugsweise C2- bis C10-Alk-1-ene, wie Ethylen, Propylen, 1-Buten, 1-Hexen, 1-Octen; vinylaromatische Verbindungen, vorzugsweise C8- bis C20-Vinylaromaten, wie Styrol, p-Methylstyrol oder p-Methoxystyrol.

Auch die Verfahrensbedingungen für die Polymerisation derartiger Monomerer in Gegenwart der beschriebenen Katalysatoren sind nicht kritisch und in der Regel bekannt. Gut geeignet sind Drücke im Bereich von 1 bis 3000, vorzugsweise 5 bis 80 bar und Temperaturen im Bereich von 0 bis 300 °C, vorzugsweise 60 bis 120 °C.

Die vorliegende Erfindung löst die eingangs definierte Aufgabe indem relevante Eigenschaften einer großen Anzahl Katalysatorproben, respektive Polymerproben, in kurzer Zeit bestimmt werden können (Hochdurchsatzverfahren). Die so gewonnenen Ergebnisse erlauben statistisch fundierte Rückschlüsse auf die Katalysatorqualität deren Aussagekraft durch herkömmliche, analoge, jedoch zeit- und materialaufwendiger durchgeführte Einzelpolymerisationsversuche nicht zu erzielen ist. Daher ist die vorliegende Erfindung insbesondere dann anzuwenden, wenn in kurzer Zeit verläßliche Daten zur Katalysatorqualität vorliegen müssen, zum Beispiel bei Großproduktionen von Polymeren mit den in Rede stehenden Katalysatoren oder der Freigabe dieser Katalysatoren für eben diese Produktionsversuche.

### Beispiele:

Sämtliche Versuche wurden unter Ausschluss von Luft und Feuchtigkeit durchgeführt, alle Geräte und Reagenzien waren dementsprechend vorbereitet. Der xylollösliche Anteil (Xl) im Polypropylen wurde analog nach ASTM D5492-98 bestimmt.

### Katalysatorträgerung (allgemeine Vorschrift):

### a) Trägerbehandlung

In einem 250mL Kolben wurden 10,5 g Kieselgel (Sylopol 2107 (Fa. Grace), ausgeheizt für 8 bei 180°C und 1 mbar) in 50 mL Toluol suspendiert. Dazu wurden innerhalb von 30 min 10,5 mL MAO-Lösung (30%ig in Toluol) zugetropft. Nach Rühren für eine Stunde wurde abfiltriert und der Rückstand mit Toluol gewaschen. Anschliessend wurde bis zur Rieselfähigkeit getrocknet. Ausbeute: 14g.

### b) Beladung

Es wurde eine Lösung aus 365 mg (600 µmol) Dimethylsilyl(bis-(2-methyl-benz[e]indenyl))zirkondichlorid 43 mL Toluol und 21 mL MAO-Lösung (30%ig in Toluol) hergestellt, in dem man das Metallocen vorlegte, dann das Toluol und dann die MAO-Lösung zugab. Dann wurde für eine Stunde gerührt. Diese Lösung wurde zum vorbehandelten Kieselgel aus a), das in einer Fritte vorgelegt wurde, gegeben, in dem man das Kieselgel innerhalb von 30 min tränkt. Man liess das Lösungsmittel ablaufen und rührte mit einem Spatel um, als die Laufmittelgrenze die Kieselgeloberfläche erreicht hatte. Nach dem Umrühren ließ man eine Stunde einwirken, presste das restliche Lösungsmittel mit Stickstoff ab und trocknete im Stickstoffstrom bis zur Gewichtskonstanz. Ausbeute: 22 g eines orangen Feststoffs. (60µmol Zr/gSiO₂)

Mit den Chargen OP 346 bis OP 350 des Metallocenkomplexes wurden nach dieser allgemeinen Vorschrift fünf Trägerkatalysatorchargen (OP 346 bis OP 350) hergestellt.

### Propylenpolymerisation (allgemeine Vorschrift) Vergleichsversuch im "Großmaßstab"

In einem 1-L-Stahlautoklaven wurden 4 mmol Triisobuylaluminium (2 molar in Heptan) vorgelegt. Dann wurden 600 mL Propylen bei Zimmertemperatur einkondensiert. Der Rührer wurde eingeschaltet. Über eine Schleuse wurden 60 mg des nach b) hergestellten Katalysators mit Argon eingeschossen. Anschliessend wurden ebenfalls über eine Schleuse 6 mg Atmer 163 (Fa. Ciba) (10%ige Lösung in Heptan) zugegeben.

Es wurde auf 65 °C geheizt. Nach 60 min wurde die Polymerisationsreaktion durch Entspannen abgebrochen und das Polypropylen als weisses Pulver isoliert. Der Xl-Wert wurde nach herkömmlicher Art in 500 ml Ansätzen nach ASTM D 5492-98 bestimmt. Der Zeitbedarf hierfür betrug 60 min. pro Probe.

Gemäß oben allgemeiner Vorschrift wurden die fünf Trägerkatalysatorchargen OP 346 bis OP 350 (siehe oben) zur Polymerisation verwendet (Ergebenisse siehe folgende Tabelle).

Metallocen (Dimethylsilyl(bis-(2-methyl-benz[e]indenyl))zirkondichlorid)-Chargentests: Polymerisation des Trägerkatalysators im 1-L-Autoklav

| Charge | Produktivität (gPolymer/gKat.) | Xl (%) |
|---|---|---|
| OP 346 | 3600 | 1,0 |
| OP 347 | 4800 | 0,9 |
| OP 348 | 3800 | 0,6 |
| OP 349 | 4650 | 1,0 |
| OP 350 | 3950 | 0,8 |

Homogenpolymerisation im Chemspeed-Reaktor (ASW 2000) (allgemeine Arbeitsvorschrift):

In einer typischen Versuchdurchdurchführung wurden 3 Reaktorblöcke mit je 4 75 ml Doppelmantelreaktoren mit Rückflusskühler eingesetzt. Vor der Dosierung der Chemikalien wurden die Reaktoren in einem automatisierten Verfahren ausgeheizt und mit Argon gespült. Die weiteren Schritte fanden unter dem Ausschluss von Luft und Feuchtigkeit statt.

Nachfolgend wird die Durchführung eines Versuchs beschrieben. Die anderen Versuche eines Versuchslaufs werden praktisch gleichzeitig (parallel) durchgeführt.

In den Reaktor wurden 15000 µl Toluol dosiert, gefolgt von 42 µl einer 30%igen Lösung von MAO in Toluol. Anschliessend wurden 200 µl einer toluolischen Lösung des Metallocens und MAO (5µmol/l bzw. 1500 µmol/l) zudosiert. Das Reaktionsgemisch wurde auf 50 °C erwärmt.

Durch kurzes Evakuieren und Begasen mit Propylen wurd die Polymerisation gestartet. Während der 10 min Reaktionszeit wurde verbrauchtes Monomer kontinuierlich nachgeliefert. Danach wurde durch quenchen mit 15000 µmol einer methanolischen HCl-Lösung die Reaktion beendet.

Folgende manuelle Arbeitsschritte wurden praktisch gleichzeitig (parallel) ausgeführt: Proben wurden über eine D4 Fritte abgesaugt, 2x mit Aceton gewaschen und im Vakuumtrockenschrank bei 80°C, 1 mbar, 3h getrocknet.

Man erhielt 2,03 g eines weissen Pulvers.

Es wurden die Trägerkatalysatorchargen OP 346 bis OP 350 verwendet.

### Weitere Angaben zur Polymerisation sind sind der nachfolgenden Tabelle zu entnehmen

Metallocen-(Dimethylsilyl(bis-(2-methyl-benz[e]indenyl))zirkondichlorid)-Chargentests Chemspeed
Homogenpolymerisation in Toluol/MAO
1 µmol Zr, Al/Zr: 500, Polymerisationsdauer: 10 min.

| Charge | Aktivität (kg/mol*h) | | XL (%) | |
|---|---|---|---|---|
| | Mittelwert | | Mittelwert | |
| OP 346 | 8600 | 10300 | 1.6 | 1.5 |
| | 12000 | | 1.4 | |
| OP 347 | 12200 | 12450 | 1.1 | 1.15 |
| | 12700 | | 1.2 | |
| OP 348 | 11500 | 9250 | 0.9 | 1.1 |
| | 7000 | | 1.3 | |
| OP 349 | 12900 | 11750 | 1.4 | 1.35 |
| | 10600 | | 1.3 | |
| OP 350 | 7500 | 10000 | 1.6 | 1.5 |
| | 12500 | | 1.4 | |

Die Xl-Werte wurden mit dem erfindungsgemäßen Hochdurchsatzverfahrens in der erfindungsgemäßen Vorrichtung B) ermittelt. Als Lösungsmittel wurde technisches Xylol verwendet, die Proben wurden von 130°C auf 5°C innerhalb von 15 min. zum auskristallisieren abgekühlt und dann wie vorher beschrieben aufgearbeitet. Der Zeitbedarf für die X1-Wertbestimmung betrug 10 min. pro Probe.

In einem weiterem Versuch wurden verschiedene rac/meso-Gemische eines Metallocens ((Dimethylsilyl(bis-(2-methyl-4-phenyl-indenyl))zirkondichlorid) auf den X1-Wert untersucht. Das rac/meso Verhältnis wurde dabei durch 1H-NMR Spektroskopie bestimmt. Die Polymerisationen wurden wie oben beschrieben im Chemspeed Reaktor durchgeführt, die Xl-Wertbestimmungen wurden mit dem erfindungsgemäßen Hochdurchsatzverfahrens in der erfindungsgemäßen Vorrichtung B) ermittelt.

| Charge | rac/meso Verhältnis | durchschnittl. Xl | Xl 1 | Xl 2 | Xl 3 | Xl 4 |
|---|---|---|---|---|---|---|
| 1 | 1,4:1 | 2,175 | 2,1 | 2,1 | 2,4 | 2,1 |
| 2 | 2,7:1 | 1,025 | 1,0 | 1,3 | 1,0 | 0,8 |
| 3 | 6,5:1 | 0,725 | 0,6 | 1,0 | 0,6 | 0,7 |
| 4 | <20:1 | 0,600 | x | 0,6 | x | x |
| 5 | >20:1 | 0,575 | 0,6 | 0,5 | 0,6 | 0,6 |
| 6 | >20:1 | 0,400 | x | 0,4 | 0,3 | 0,5 |
| 7 | >20:1 | 0.366 | x | 0,3 | 0,3 | 0,5 |

x: Wert nicht bestimmt, wegen mechanischer Probleme Xl-Werte in %

Man erkennt, dass das man mit dem erfindungsgemäßen Verfahren, beispielsweise den Xl-Wert und/oder die Produktivität von Katalysatoren schnell ermitteln kann. Weiterhin erhält man mit dem erfindungsgemäßen Verfahren einen größeren Datensatz zur statistischen Auswertung von relevanten Kenndaten, z.B. Xl-Wert oder Katalysator-Produktivität. Somit kann man fundierte Kenntnisse über die Güte von Katalysatoren erhalten (schnelle Qualitätskontrolle der Katalysatoren).

## Patentansprüche

1. Verfahren zur Bestimmung der Qualität verschiedener Chargen eines Polymerisationskatalysators umfassend
a) die Bereitstellung der Chargen des Katalysators,
b) die Polymerisation eines Monomeren mit diesen Chargen des Katalysators,
c) die Isolierung der in b) erhaltenen Polymeren,
d) die Charakterisierung der Polymeren
**dadurch gekennzeichnet, daß** das Verfahren in einer Anordnung aus n Gefäßen im wesentlichen automatisiert durchgeführt wird, wobei die Verfahrensschritte a) bis d) alle parallel oder alle seriell oder ein Teil der Vertahrensschiritte a) bis d) parallel und der andere Teil seriell durchgeführt werden und n eine natürliche Zahl größer oder gleich 2 ist.

2. Verfahren nach Anspruch 1, **dadurch gekennzeichnet, daß** n größer oder gleich 12 ist.

3. Verfahren nach den Ansprüchen 1 bis 2, **dadurch gekennzeichnet, daß** die Verfahrensschritte b) und / oder c) und / oder gegebenenfalls d) parallel durchgeführt werden.

4. Verfahren nach den Ansprüchen 1 bis 3, **dadurch gekennzeichnet, daß** es sich bei den Polymerisationskatalysatoren um Katalysatoren zur Polymerisation von Olefinen oder vinylaromatischen Verbindungen handelt.

5. Verfahren nach den Ansprüchen 1 bis 4, **dadurch gekennzeichnet, daß** es sich bei dem Verfahrensschritt d) um die Bestimmung der xylollöslichen Anteile (XI-Wertbestimmung) und /oder der Polymerisationsaktivität handelt.

6. Verfahren nach den Ansprüchen 1 bis 5, **dadurch gekennzeichnet, daß** es sich bei den Katalysatoren um Metallocenkatalysatoren handelt.

7. Verwendung einer Vorrichtung zur, im wesentlichen automatisierten, Bestimmung der Qualität verschiedener Chargen eines Polymerisationskatalysators, im wesentlichen bestehend aus A) einem Synthesemodul und B) einem Analysemodul zur Bestimmung löslicher und unlöslicher Polymerfraktionen, wobei A) und/oder B) jeweils mindestens vier Gefäße enthalten und das kumulierte jeweilige Volumen jener Gefäße aus A) oder B) nicht größer ist als 100000 ml ist.

8. Verwendung nach Anspruch 7, wobei die Vorrichtung ein Anaylsenmodul B) zur Bestimmung der xylollöslichen und xylolunlöslichen Polymerfraktionen enthält.

## Claims

1. A method for determining the quality of different batches of a polymerisation catalyst comprising
a) providing the batches of the catalyst,
b) polymerising a monomer with these batches of the catalyst,
c) isolating the polymers obtained in b),
d) characterising the polymers
**characterised in that** the method is carried out in an arrangement of n vessels in a substantially automated manner, method steps a) to d) all being carried out in parallel or all being carried out in series or some of method steps a) to d) being carried out in parallel and the remainder being carried out in series and n being a natural number of greater than or equal to 2.

2. A method according to claim 1, **characterised in that** n is greater than or equal to 12.

3. A method according to claims 1 to 2, **characterised in that** method steps b) and/or c) and/or optionally d) are carried out in parallel.

4. A method according to claims 1 to 3, **characterised in that** the polymerisation catalysts are catalysts for polymerising olefins or vinyl aromatic compounds.

5. A method according to claims 1 to 4, **characterised in that** method step d) involves determining the xylene-soluble fractions (XS value determination) and/or polymerisation activity.

6. A method according to claims 1 to 5, **characterised in that** the catalysts are metallocene catalysts.

7. Use of an apparatus for determining, in substantially automated manner, the quality of different batches of a polymerisation catalyst, substantially consisting of A) a synthesis module and B) an analysis module for determining soluble and insoluble polymer fractions, A) and/or B) in each case containing at least four vessel and the respective cumulative volume of the vessels of A) or B) being no greater than 100000 ml.

8. Use according to claim 7, the apparatus containing an analysis module B) for determining the xylene-soluble and xylene-insoluble polymer fractions.

## Revendications

1. Procédé pour la détermination de la qualité de différentes charges d'un catalyseur de polymérisation, comprenant
a) la préparation des charges du catalyseur,
b) la polymérisation d'un monomère avec ces charges du catalyseur,
c) l'isolement des polymères obtenus au point b),
d) la caractérisation des polymères
**caractérisé en ce que** le procédé est réalisé dans une disposition de n récipients de manière essentiellement automatisée, les étapes de procédé a) à d) étant toutes réalisées en parallèle ou toutes en série ou une partie des étapes de procédé a) à d) étant réalisée en parallèle et l'autre partie en série et n étant un nombre naturel supérieur ou égal à 2.

2. Procédé selon la revendication 1, **caractérisé en ce que** n est supérieur ou égal à 12.

3. Procédé selon les revendications 1 à 2, **caractérisé en ce que** les étapes de procédé b) et/ou c) et/ou le cas échéant d) sont réalisées en parallèle.

4. Procédé selon les revendications 1 à 3, **caractérisé en.ce qu'**il s'agit, pour les catalyseurs de polymérisation, de catalyseurs destinés à la polymérisation d'oléfines ou de composés vinylaromatiques.

5. Procédé selon les revendications 1 à 4, **caractérisé en ce qu'**il s'agit, pour l'étape de procédé d), de la détermination des proportions solubles dans le xylène (détermination de la valeur XI) et/ou de l'activité de polymérisation.

6. Procédé selon les revendications 1 à 5, **caractérisé en ce qu'**il s'agit, pour les catalyseurs, de catalyseurs de métallocène.

7. Utilisation d'un dispositif pour la détermination, de manière essentiellement automatisée, de la qualité de différentes charges d'un catalyseur de polymérisation, essentiellement constitué par A) un module de synthèse et B) un module d'analyse pour la détermination de fractions de polymère solubles et insolubles, où A) et B) contiennent à chaque fois au moins quatre récipients et le volume à chaque fois cumulé des différents récipients de A) ou de B) n'est pas supérieur à 100 000 ml.

8. Utilisation selon la revendication 7, où le dispositif contient un module d'analyse B) destiné à la détermination des fractions de polymère solubles et insolubles dans le xylène.
